# EUROPÄISCHE PATENTSCHRIFT

(11) **EP 2 842 992 B1**
(45) Veröffentlichungstag und Bekanntmachung des Hinweises auf die Patenterteilung: **08.02.2017**
(21) Anmeldenummer: 13181889.0
(22) Anmeldetag: 27.08.2013
(51) Int. Cl.: C08K 3/08, C08K 7/22, C08L 21/00, C08L 83/04, H01B 3/46

(54) **Isolationsmaterial**
Insulation material
Matériau d'isolation

(43) Veröffentlichungstag der Anmeldung: 04.03.2015
(73) Patentinhaber: ContiTech Elastomer-Beschichtungen GmbH, 30165 Hannover (DE)
(72) Erfinder: Storre, Jens, 37176 Nörten-Hardenberg (DE); Papadimitriou, Alexander, 37154 Northeim (DE); Paulsen, Hans Peter, 37079 Göttingen (DE)

(56) Entgegenhaltungen:
- EP-A1- 0 971 369
- EP-A1- 1 298 161
- EP-A1- 2 538 416
- EP-A1- 2 573 443
- EP-A1- 2 623 563
- EP-A2- 1 079 398
- EP-A2- 1 266 948
- WO-A1-2006/085816
- WO-A1-2006/134400
- US-A- 3 317 455
- US-A- 5 691 407
- US-A1- 2001 016 609

## Beschreibung

Die Erfindung betrifft ein flexibles Isolationsmaterial auf der Basis einer Kautschukmischung enthaltend wenigstens einen Silikonkautschuk.

Isolationsmaterialien auf Basis von Silikonkautschuk zur elektrischen Isolation von Hochfrequenzanwendungen oder zur Verwendung im Bau- und Haushaltsbereich ("Fenstersilikon") sind bereits vielfach bekannt. So offenbaren bspw. EP 1 298 161 A1, EP 0 971 369 A1, US 3,317,455, EP 1 079 398 A2, US 5,691, 407, EP 2 623 563 A1 und WO 2006/085816A1 Silikonkautschukmischungen zur elektrischen Isolation. Die Anwendung von flüssigen oder selbsthaftenden Silikonmischungen für den Bau- und Haushaltsbereich wird bspw. in US 2001/016609 A1, EP 1 266 948 A2 oder WO 2006/134400 A1 beschrieben.

Flexible Isolationsmaterialien, insbesondere für die thermische und/oder akustische Isolation von Bauteilen, sind bereits bspw. aus WO 2012/175268 A1, WO 2011/154188A1 oder WO 2011/047923A1 bekannt. Die dort und insbesondere auch die in EP 2 538 416 A1 und EP 2573 443 A1 beschriebenen Isolationsmaterialien dienen zur Isolation bei höheren Temperaturen, d.h. in der Regel Temperaturen oberhalb von 130°C. Für Temperaturen unterhalb sind die dort beschriebenen Isolationsmaterialien nicht geeignet. Des Weiteren zeigen die bekannten Isolationsmaterialien unangenehme Gerüche, die unter anderem aus den Spaltprodukten der dort verwendeten peroxidischen Vernetzung resultieren und von vielen Kunden als unangenehm und störend empfunden werden. Insbesondere für die Verwendung des Isolationsmaterials im Lebensmittelbereich darf keine Geruchsbelästigung entstehen. Gleichzeitig wurde zum Teil bei einigen der bekannten Isolationsmaterialien ein so genanntes Ausschwitzen von Weichmachern beobachtet, was nicht nur optisch störend ist, sondern auch die physikalischen Eigenschaften des Isolationsmaterials negativ beeinflussen kann.

Der Erfindung liegt daher die Aufgabe zu Grunde, ein flexibles Isolationsmaterial bereitzustellen, welches auch bei niedrigeren Temperaturen als die aus dem Stand der Technik bekannten Isolationsmaterialien einsetzbar ist. Des Weiteren sollen unangenehme Gerüche vermieden werden, so dass das Isolationsmaterial auch im Lebensmittelbereich eingesetzt werden kann. Gleichzeitig soll einem Ausschwitzen, d.h. einer Diffusion von Weichmachern an die Oberfläche sicher entgegengetreten werden.

Gelöst wird diese Aufgabe erfindungsgemäß dadurch, dass das flexible Isolationsmaterial auf der Basis wenigstens einer Kautschukmischung ist, welche wenigstens einen Silikonkautschuk und wenigstens einen Edelmetallkatalysator und wenigstens ein Flammschutzmittel enthält, wobei die Kautschukmischung teilweise unvernetzt und plastisch verformbar ist und wobei das Flammschutzmittel frei von Halogen und Antimontrioxid ist und wobei das Isolationsmaterial zwischen 60°C und 130°C vulkanisierbar ist.
Durch die Verwendung wenigstens eines Edelmetallkatalysators findet eine Additionsvernetzung statt, die zum einen geruchsneutral ist und vor allem überraschenderweise auch den Einsatz des Isolationsmaterials bei niedrigeren Temperaturen zwischen 60 und 130°C ermöglicht. Ebenso ist keine Diffusion von Weichmachern an die Oberfläche mehr zu beobachten, sofern in der Rezeptur nur chemisch einvernetzende Silikonöle als Weichmacher verwendet werden. Überraschenderweise wurde gefunden, dass die Vernetzungsreaktion mit wenigstens einem Edelmetallkatalysator auch ohne Einfluss hoher Temperaturen an der Bauteiloberfläche stattfindet und darüber zusätzlich einem Ausschwitzen von Ölen entgegenwirkt. Die Möglichkeit des Einsatzes des Isolationsmaterials auch bei niedrigeren Temperaturen führt zusätzlich zu einer erhöhten Arbeitssicherheit. Des Weiteren zeigt sich überraschend, dass sich über die geringere Vernetzungstemperatur und der daraus resultierenden geringeren thermischen Ausdehnung des Materials noch komplexere Geometrien isolieren lassen.

Die Flexibilität des Isolationsmaterials wird hierbei dadurch erreicht, dass die Kautschukmischung teilweise unvernetzt und plastisch verformbar ist.

Teilweise unvernetzt bedeutet, dass entweder noch nicht verbrauchte Vernetzungschemikalien oder noch vernetzbare Polymerbestandteile enthalten sind. Unter plastischer Verformung wird die Fähigkeit von Stoffen verstanden, sich unter einer Krafteinwirkung nach Überschreiten einer Fließgrenze irreversibel zu verformen und diese Form nach der Einwirkung beizubehalten. Es kann somit wie Knetmasse verwendet werden und passt sich der Form des zu isolierenden Objektes an. Die Kautschukmischung kann hierbei zusätzlich so eingestellt werden, dass sie eine Klebrigkeit aufweist, die dazu führt, dass sie an sich selbst und an der Oberfläche des zu isolierenden Objektes kleben (haften) bleibt und somit eine gute Fixierung gewährleistet wird.
Das auf das zu isolierende Bauteil aufgebrachte Isolationsmaterial, enthaltend die obige Kautschukmischung, kann nach der Aufbringung durch Einwirkung von Temperatur und/oder Strahlung vernetzt bzw. weiter vernetzt werden. Das Isolationsmaterial ist nach der Aufbringung also noch vernetzbar. Bei der Strahlung kann es sich um IR-Strahlung, Mikrowellen oder sonstige energiereiche Strahlung handeln. Die Einwirkung von Temperatur kann beispielsweise durch das Erwärmen mit heißer Luft durch einen Föhn erfolgen. Besonders einfach und schnell lässt sich aber dadurch vernetzen, dass die Temperatureinwirkung durch das zu isolierende Bauteil erfolgt. Durch die Eigenwärme des zu isolierenden Bauteils wird vernetzt. Dies geschieht durch das Vorhandensein wenigstens eines Edelmetallkatalysators nun schon bei relativ niedrigen Temperaturen zwischen 60 und 130°C.
Durch die nachträgliche Vernetzung wird das Isolationsmaterial langzeitstabil in seiner Position fixiert, da die Kautschukmischung bei der Vernetzung vom plastischen in den elastischen Zustand übergeht. Man erhält ein elastomeres Isolationsbauteil, welches auch nach der Demontage an gleicher Stelle oder an anderer Stelle bei einem gleich ausgebildeten, zu isolierenden Bauteil wiederverwendet werden kann. Letzteres wird oft als Formteil bezeichnet.

Erfindungsgemäß enthält die Kautschukmischung für das flexible Isolationsmaterial wenigstens einen Silikonkautschuk. Hierbei können alle der fachkundigen Person bekannten Silikonkautschuke verwendet werden. Möglich sind bspw.

Silikonkautschuke, die auch als Poly(organo)siloxane bezeichnet werden. Sie weisen für Vernetzungsreaktionen zugängige Gruppen auf, wobei es sich vorwiegend, aber nicht ausschließlich, um Wasserstoffatome, Hydroxygruppen und Vinylgruppen handelt, welche sich jeweils in der Kette oder an den Kettenenden befinden können.
Es gibt kaltvernetzende Silikonkautschuke (RTV = Raumtemperatur vernetzend) und heißvernetzende Silikonkautschuke (HTV = Hochtemperatur vernetzend).
Bei den RTV-Silikonkautschuken lassen sich Ein- und Zweikomponentensysteme unterscheiden. Der Silikonkautschuk kann auch als Vormischung aus Polymer, Füllstoff und Öl, wie auf dem Markt üblich, eingesetzt werden.
Es ist denkbar, dass die Kautschukmischung zusätzlich noch wenigstens einen weiteren Kautschuk enthält, der kein Silikonkautschuk ist. Hierbei sind alle der fachkundigen Person bekannten Kautschuke möglich.
Insbesondere zur Einstellung der Viskosität enthält die Kautschukmischung zusätzlich noch wenigstens einen Weichmacher. Hierbei können alle der fachkundigen Person bekannten Weichmacher verwendet werden, die kompatibel mit dem jeweiligen Silikonkautschuk sind. Insbesondere die Verwendung von Silikonöl hat sich hierbei als vorteilhaft erwiesen, da dies gut mit dem Silikonkautschuk verträglich ist. Besonders gut geeignet haben sich einvernetzende Silikonöle gezeigt, die sich an der Vernetzung der Kautschukmischung beteiligen und häufig als vernetzbare Silikonöle bezeichnet werden. Diese führen zu einer weiteren deutlichen Reduzierung des möglichen Ausschwitzens.

Wesentlich für die Erfindung ist es, dass die Kautschukmischung wenigstens einen Edelmetallkatalysator enthält. Bei dem Edelmetall kann es sich um reines Edelmetall oder bevorzugt um eine Edelmetallverbindung handeln. Das Vorhandensein eines derartigen Katalysators bedingt einen anderen Vernetzungsmechanismus in einer meist durch die Edelmetallverbindungen katalysierten Addition von Si-H-Gruppen an siliziumgebundene Vinylgruppen, die beide in die Polymerketten bzw. an deren Ende eingebaut sind.
In einer besonders bevorzugten Ausführungsform ist die Kautschukmischung frei von weiteren Vernetzungsmitteln, insbesondere ist sie frei von Peroxiden.
Vorteilhafterweise ist wenigstens ein für den jeweiligen Katalysator geeigneter Inhibitor in der Kautschukmischung vorhanden.

Als Katalysatoren werden bevorzugt Platinkatalysatoren eingesetzt, bei denen die aktive Spezies als Platin(0) vorliegt.
Die Reaktivität dieser so genannten Additionsvernetzung ist von der Konzentration des Katalysators und des Inhibitors sowie der Temperatur abhängig. Hierdurch lassen sich individuell auf Kundenwunsch herstellbare flexible Isolationsmaterialien bereitstellen, welche überraschenderweise auch nur eine geringe Schrumpfung nach der Vernetzung aufweisen. Insbesondere in Kombination mit der weiter unten aufgeführten Porenstruktur ist die Verwendung von Katalysatoren vorteilhaft, da die Porenstruktur mit eingeschlossenem Gas oder auch Luft zu einer besonders starken thermischen Extraktion neigt. Wie bereits oben erwähnt sind somit auch noch komplexere Geometrien isolierbar.

Um die thermischen oder auch akustischen Isolationseigenschaften zu verbessern, ist es von Vorteil, wenn die Kautschukmischung eine Porenstruktur aufweist. Diese Porenstruktur kann durch den Einsatz von chemischen Treibmitteln oder Mikrokugeln erfolgen, die in die Kautschukmischung eingemischt sind. Als Treibmittel können sowohl anorganische sowie organische Verbindungen eingesetzt werden. Bei den Mikrokugeln handelt es sich um hohle Kugeln (Mikrosphären) mit einem Durchmesser im µm-Bereich aus Glas, Phenolharz, Kohlenstoff oder thermoplastischem Kunststoffmaterial. Es gibt es sie in expandierbarer Form, wobei sie mit einem Treibmittel gefüllt sind und sich beim Erwärmen ausdehnen, oder in vorexpandierter Form; die Ausdehnung ist hier schon abgeschlossen.

Bevorzugt enthält die Kautschukmischung 2 bis 200 phr Mikrokugeln, besonders bevorzugt 2 bis 30 phr, ganz besonders bevorzugt 2 bis 15 phr bereits expandierte Mikrokugeln aus thermoplastischen Material, so dass die Kautschukmischung bereits vor der Verwendung als Isolationsmaterial bzw. vor der Vernetzung eine Porenstruktur aufweist.
Mikrokugeln bieten den Vorteil der Bildung einer geschlossenen Porenstruktur, die für Isolationszwecke wegen geringerer Konvektion in den Poren besser geeignet ist. Je höher die Menge an expandierten Mikrokugeln, desto besser wird durch den höheren Porenanteil die Isolationswirkung. Bei zu großen Mengen an Mikrokugeln können sich jedoch verarbeitungstechnische Probleme bei der Mischungsherstellung oder -verarbeitung ergeben. Das Isolationsmaterial verliert an Festigkeit, was beim Aufbringen auf die zu isolierenden Bauteile von Nachteil ist.

Gemäß einer alternativen Ausführungsform enthält die Kautschukmischung 10 bis 200 phr Mikrokugeln aus Glas. Mit dieser Variante lässt sich ein Isolationsmaterial mit höherer Standfestigkeit und geringerer Kompressibilität erhalten, da sich Mikrokugeln aus Glas im Gegensatz zu Mikrokugeln aus thermoplastischem Material nicht komprimieren lassen.

Des Weiteren kann die Kautschukmischung für das flexible Isolationsmaterial neben den üblichen Füllstoffen noch zusätzliche Pigmente enthalten. Mit diesen Pigmenten ist es möglich, das Isolationsmaterial individuell nach Kundenwunsch einzufärben. So können bspw. thermochromische Pigmente verwendet werden, die sich bei einer definierten Temperatur oder innerhalb eines bestimmten Temperaturbereiches verfärben. Hiermit können zum Beispiel Überheizungen angezeigt werden. Oder aber es können lasermarkierbare Pigmente verwendet werden, wie sie bspw. aus DE102009044718A1 bekannt sind.
Zur besseren Ableitung von elektrischen Spannungen kann die Kautschukmischung zusätzlich leitfähige Additive wie leitfähige Ruße und / oder Kohlenstoffnanoröhren (CNT, engl. carbon nano tubes) enthalten. Zur optimalen Dispersion der CNT können diese vor dem Einmischen in die Kautschukmischung mit wenigstens einem flüssigen bzw. viskosen Medium vermischt vorliegen. Dies ist zum Beispiel aus US2010/0264376A1 oder auch aus PCT/EP2013/057442 bekannt.

Zur Verbesserung des Flammschutzes enthält die Kautschukmischung des Isolationsmaterials erfindungsgemäß wenigstens ein Flammschutzmittel. Als Flammschutzmittel können alle der fachkundigen Person bekannten Flammschutzmittel verwendet werden. Aufgrund aktueller gesetzlicher Vorgaben ist das verwendete Flammschutzmittel frei von Halogen und Antimontrioxid. Es kommen hierbei insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Carbonate, wie Calciumcarbonat oder Magnesiumcarbonat, oder Blähgraphit in Frage. Als besonders gut geeignet haben sich Stannate, insbesondere Zinkhydroxystannat (ZHS), gezeigt. ZHS ist besonders ungefährlich für den Menschen, so dass keine besonderen Sicherheitsmaßnahmen erforderlich sind. Ferner sind bereits vorgemischte Zubereitungen unterschiedlicher Flammschutzmittel einsetzbar, die handelsüblich erhältlich sind.

Das erfindungsgemäße Isolationsmaterial lässt sich nach dem Fachmann bekannten Verfahren herstellen, wobei eine Kautschukmischung mit allen benötigten Zuschlagstoffen erzeugt wird und die Mischung im Anschluss portioniert wird. Dies kann mit Hilfe eines Mischextruders oder einer Walze oder eines Zweischneckenextruders erfolgen.
Das Isolationsmaterial kann in unterschiedlichsten Formen angeboten werden, z. B. in Form von Kugeln, Strängen, Streifen, Bahnen oder Bändern, oder auch einfach formlos als verformbare Masse, wie bspw. Knetmasse vorliegen.
Das flexible Isolationsmaterial kann hierbei vor dem Aufbringen auf das zu isolierende Bauteil bevorzugt als Fertigteil oder als aufzuziehender Schlauch vorliegen. Es kann aber ebenso im Spritzgußverfahren mittels bspw. einer Kartusche aufgebracht werden.
Bei den zu isolierenden Bauteilen handelt es sich bevorzugt um komplexe Bauteile wie zum Beispiel komplexe Konstruktionen von Flanschen und Messgeräten, Kondensatableiter, Ventile, Kombinationen aus Ventilen, Leitungen und Verbindunsgflanschen, etc.

Anhand eines Ausführungsbeispiels soll die Erfindung näher erläutert werden, ohne dabei auf dieses beschränkt zu sein.

Es wurde eine auf Silikonkautschuk basierende Kautschukmischung 1 mit der in Tabelle 1 dargestellten erfindungsgemäßen Zusammensetzung hergestellt. Eine Spalte der Tabelle gibt die möglichen Mengenbereiche für ein erfindungsgemäßes Isolationsmaterial auf der Basis von Silikonkautschuk an. Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Als Vergleich ist in der Tabelle 1 eine Silikonkautschukmischung 2 aufgeführt, die peroxidisch vernetzt wird.

Das erfindungsgemäße Isolationsmaterial zeigt im Gegensatz zu der Vergleichsmischung 2 eine hervorragende thermische und akustische Isolation auch wenn bei Temperaturen von weniger als 130 °C vulkanisiert wurde.

**Tabelle 1**

| Substanz | Mischung 1 | mögliche Mengenbereiche | Vergleichsmischung 2 |
|---|---|---|---|
| Silikonkautschuk ^{a} | 100 | 100 | 100 |
| Hitzestabilisatoren | 1,95 | 0 bis 6 | 1,95 |
| Flammschutzmittel ^{b} | 2,0 | 0 bis 4 | 0 |
| Verarbeitungshilfsmittel | 0,3 | 0 bis 3 | 0,3 |
| Peroxidvernetzer | - | - | 1,05 |
| Edelmetallkatalysator-Batch ^{c} | 1,5 | 0,1 bis3,0 | 0 |
| Silikonöl | 9,3 | 1,5 bis 20 | 9,30 |
| Inhibitoren ^{d} | 0,5 | 0 bis 3 | 0 |
| vorexpandierte Mikrokugeln | 5,58 | 2 bis 100 | 5,58 |
| Additive (z.B. Vernetzer^{e}, leitfähige Füllstoffe) | 2,5 | 0 bis 12 | - |
| Geruch | geruchslos | | deutlich nach Peroxid-Spaltprodukten |
| Start der Vernetzung bei Temperatur von | 60 bis 80 °C | | 130 °C |

| | | | |
|---|---|---|---|
| ^{a} Elastosil® 401/40 S, Elastosil® 420/50 S, Fa. Wacker ^{b} Elastosil® AUX Batch SB 2, Fa. Wacker ^{c} Elastosil® AUX Batch PT 1, Fa. Wacker; Xiameter® RBM-9202 CATALYST, Fa. Xiameter ^{d} Elastosil® Inhibitor PT 88, Fa. Wacker; Xiameter® RBM-9200 Inhibitor, Fa. Xiameter ^{e} Elastosil®Vernetzer W, Fa. Wacker; Xiameter® RBM-9201 Crosslinker, Fa. Xiameter | | | |

## Patentansprüche

1. Flexibles Isolationsmaterial auf der Basis wenigstens einer Kautschukmischung, **dadurch gekennzeichnet, dass** die Kautschukmischung wenigstens einen Silikonkautschuk und wenigstens einen Edelmetallkatalysator und wenigstens ein Flammschutzmittel enthält, wobei die Kautschukmischung teilweise unvernetzt und plastisch verformbar ist und wobei das Flammschutzmittel frei von Halogen und Antimontrioxid ist und wobei das Isolationsmaterial zwischen 60°C und 130°C vulkanisierbar ist.

2. Isolationsmaterial nach Anspruch 1, **dadurch gekennzeichnet, dass** die Kautschukmischung eine Porenstruktur aufweist.

3. Isolationsmaterial nach Anspruch 1 oder 2, **dadurch gekennzeichnet, dass** die Kautschukmischung Mikrokugeln enthält.

4. Isolationsmaterial nach einem der Ansprüche 1 bis 3, **dadurch gekennzeichnet, dass** die Kautschukmischung wenigstens ein vernetzbares Silikonöl enthält.

## Claims

1. Flexible insulation material based on at least one rubber mixture, **characterized in that** the rubber mixture comprises at least one silicone rubber and at least one noble metal catalyst and at least one flame retardant, where the rubber mixture is to some extent uncrosslinked and plastically deformable, and where the flame retardant is free from halogen and from antimony trioxide, and where the insulation material is vulcanizable at from 60°C to 130°C.

2. Insulation material according to Claim 1, **characterized in that** the rubber mixture has a pore structure.

3. Insulation material according to Claim 1 or 2, **characterized in that** the rubber mixture comprises microspheres.

4. Insulation material according to any of Claims 1 to 3, **characterized in that** the rubber mixture comprises at least one crosslinkable silicone oil.

## Revendications

1. Matériau d'isolation flexible à base d'au moins un mélange de caoutchouc, **caractérisé en ce que** le mélange de caoutchouc contient au moins un caoutchouc silicone et au moins un catalyseur en métal précieux, et au moins un agent retardateur de flamme, le mélange de caoutchouc étant partiellement non réticulé et étant déformable plastiquement, et l'agent retardateur de flamme étant exempt d'halogène et de trioxyde d'antimoine et le matériau d'isolation pouvant être vulcanisé entre 60°C et 130°C.

2. Matériau d'isolation selon la revendication 1, **caractérisé en ce que** le mélange de caoutchouc présente une structure poreuse.

3. Matériau d'isolation selon la revendication 1 ou 2, **caractérisé en ce que** le mélange de caoutchouc contient des microbilles.

4. Matériau d'isolation selon l'une quelconque des revendications 1 à 3, **caractérisé en ce que** le mélange de caoutchouc contient au moins une huile de silicone réticulable.
